# EUROPEAN PATENT APPLICATION

(11) **EP 2 493 159 A1**
(43) Date of publication of application: **29.08.2012**
(21) Application number: 11155821.9
(22) Date of filing: 24.02.2011
(51) Int. Cl.: H04M 1/725

(54) **Synchronisation of passive NFC tag with a changing display**

(71) Applicant: Research In Motion Limited, Waterloo, ON N2L 3W8 (CA)
(72) Inventor: Deluca, Michael Joseph, Rolling Meadows, IL 60008 (US)
(74) Representative: Hibbert, Juliet Jane Grace

(57) **Abstract**

A communications system (20) includes a display (21) configured to display at least one time variable image, at least one passive near field communications (NFC) device (24) associated with the display (21), and a media device (40). An identifier is associated with the at least one passive NFC device (24). A mobile wireless communications device (26) includes a second NFC device (28), a wireless transceiver (27), and a processor (29). The processor (29) is configured to receive, via communication between the at least one passive NFC device (24) and the second NFC device (28), an identifier for the at least one passive NFC device (28). The processor (29) is also configured to send, via the wireless transceiver (27) and to the media device (40), the identifier and the identifier time, and receive, from and media device (40) and via the wireless transceiver (22), data relating to the at least one time variable image based upon the identifier and an identifier time based upon the identifier.

## Description

### Technical Field

The present disclosure relates to communications systems, and, more particularly, to mobile wireless communications systems and related methods.

### Background

Mobile communication systems continue to grow in popularity and have become an integral part of both personal and business communications. Various mobile devices now incorporate Personal Digital Assistant (PDA) features such as calendars, address books, task lists, calculators, memo and writing programs, media players, games, etc. These multi-function devices usually allow electronic mail (email) messages to be sent and received wirelessly, as well as access the internet via a cellular network and/or a wireless local area network (WLAN), for example.

Some mobile devices incorporate contactless card technology and/or near field communication (NFC) chips. NFC technology is commonly used for contactless short-range communications based on radio frequency identification (RFID) standards, using magnetic field induction to enable communication between electronic devices, including mobile wireless communications devices. This short-range high frequency wireless communications technology exchanges data between devices over a short distance, such as only a few centimeters.

NFC posters are an inexpensive way to communicate supplemental details about information, such as an advertisement, conveyed on the poster. By tapping an NFC enabled smart phone on an area of the poster having a passive NFC tag, the smart phone is able to send identifier information related to the passive NFC tag over the cellular network and receive supplemental details related to the area of the poster. The supplemental details may then be displayed by the smart phone. However, the NFC poster has a pre-printed static display and is unable to present multiple types of advertisements in a cost effective manner. Static displays are disadvantageous in areas where advertising space is scarce, such as areas with a high volume of advertisement consumers or mall kiosks. Thus, what is desired is a system for providing cost effective supplemental information while addressing disadvantages of NFC posters with static displays.

### Brief Description of the Drawings

FIG. 1 is a schematic block diagram of an example embodiment of a communications system in accordance with the present disclosure.

FIG. 2 is a schematic block diagram of another example embodiment of a communications system in accordance with the present disclosure.

FIG. 3 is a schematic block diagram of a further example embodiment of a communications system in accordance with the present disclosure.

FIG. 4 is an electronic display, such as may be used with the communications systems of FIGS. 1-2, displaying multiple images.

FIG. 5 is a flowchart of a communications method in accordance with the present disclosure.

FIG. 6 is a schematic block diagram illustrating example components of a mobile wireless communications device that may be used with the communications systems of FIGS. 1, 2, and 3.

### Detailed Description

The present description is made with reference to the accompanying drawings, in which various embodiments are shown. However, many different embodiments may be used, and thus the description should not be construed as limited to the embodiments set forth herein. Rather, these embodiments are provided so that this disclosure will be thorough and complete. Like numbers refer to like elements throughout, and prime notation and multiple prime notation is used to indicate similar elements or steps in alternative embodiments.

Generally speaking, a communications system may include a video display configured to display at least one time variable image, and at least one passive near field communications (NFC) device associated with the display. The at least one passive NFC device has an identifier associated therewith. The communications system may also include a media device, and mobile wireless communications device such as a smart phone, which may comprise a second NFC device, a wireless transceiver, and a processor coupled to the second NFC device, and the wireless transceiver. The processor may be configured to receive, via communication between the at least one passive NFC device and the second NFC device, the identifier associated with the at least one passive NFC device. The processor may also send, via the wireless transceiver and to the media device, the identifier. The processor may be further configured to receive, from the media device and via the wireless transceiver, data relating to the at least one time variable image based upon the identifier and an identifier time.

This communications system advantageously enables the quick and easy distribution of additional information about time variable images (e.g. changing advertisements) to the mobile wireless communications system. Further, basing the data about an image sent to the mobile wireless communications device upon an identifier time allows the system to function without updating the identifiers of respective passive NFC devices when images being presented by the display change, thereby reducing the complexity of the system.

The processor may be configured to determine the identifier time and to send the identifier time to the media device. Additionally or alternatively, the media device may be configured to determine the identifier time.

The mobile wireless communications device may include a mobile display coupled to the processor, and the processor may be configured to present the data on the mobile display. The data may comprise a web link, and the processor may be configured to access the web link upon receipt thereof.

In some applications, the display may comprise an electronic display configured to display the at least one time variable image as a sequence of different images. In other applications, the display may be a substrate, and the at least one time variable image may be printed thereon. The at least one time variable image may comprise a plurality thereof, and the at least one passive NFC device may comprise a plurality of passive NFC devices positioned adjacent respective different images.

The media device may comprise a media server. In this case, the processor may be configured to send the identifier to the media server, and the media server may be configured to generate the data based upon the identifier and the identifier time, and cause the data to be wirelessly sent the mobile wireless communications device.

The media device may comprise a controller. The controller may be associated with the display, and a controller wireless transceiver may be coupled thereto. The processor may be configured to send the identifier to the controller via the wireless transceiver and the controller wireless transceiver. In this case, the controller may be configured to generate the data based upon the identifier and the identifier time, and to send the data to the mobile wireless communications device.

A method aspect is directed to a communications method that may comprise associating at least one passive near field communications (NFC) device with a display, and displaying at least one time variable image using the display. The method may also include receiving, via communication between the at least one passive NFC device and a second NFC device of a mobile wireless communications device, an identifier for the at least one passive NFC device. The method may further include sending, via a wireless transceiver in communication with a processor of the mobile wireless communications device, the identifier to a media device. The method may additionally include receiving, from the media device and via the wireless transceiver of the mobile wireless communications device, data relating to the at least one time variable image based upon the identifier and an identifier time.

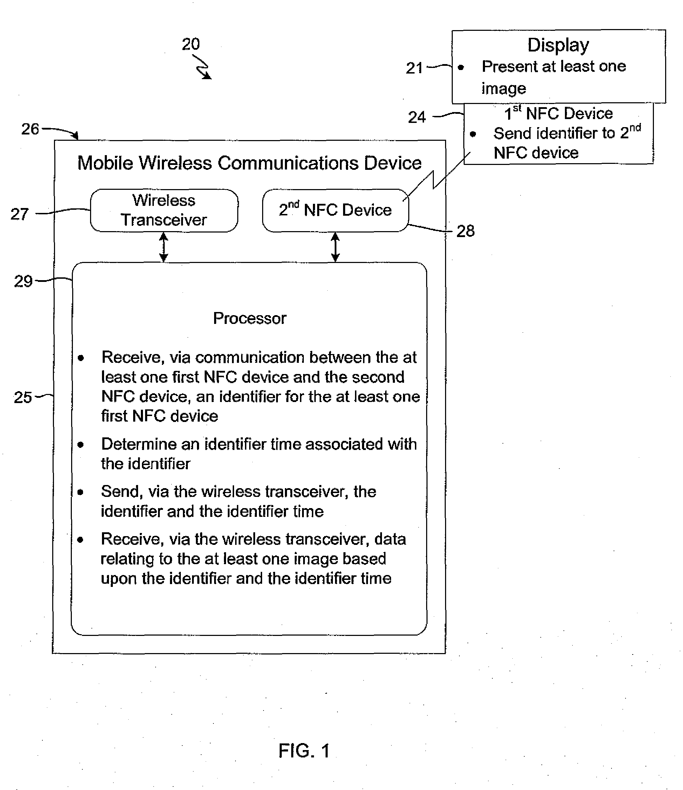

With initial reference to FIG. 1, a communications system **20** is now described. The communications system **20** includes a mobile wireless communications device **26** and a display **21.** The display **21** may be an electronic display (e.g. LCD, Plasma, CRT), or may be a non-electronic display, such as a poster or sign. The display **21** is configured to present at least one image (e.g. an advertising image). A passive near field communications (NFC) device **24** is associated with the display **21,** and has an identifier associated therewith.

By way of background, NFC is a short-range wireless communications technology in which NFC-enabled devices are "swiped," "bumped" or otherwise moved in close proximity to communicate. In one non-limiting example implementation, NFC may operate at 13.56 MHz and with an effective range of about 10cm, but other suitable versions of near-field communication which may have different operating frequencies, effective ranges, etc., for example, may also be used. Passive NFC devices require no internal power source and receive their operating power from the communication signal received from an active NFC device.

Example mobile wireless communications devices **26** may include portable or personal media players (e.g., music or MP3 players, video players, etc.), remote controls (e.g., television or stereo remotes, etc.), portable gaming devices, portable or mobile telephones, smartphones, tablet computers, etc.

The mobile wireless communications device **26** includes a housing **25** carrying a processor **29,** a wireless transceiver **27,** and a second NFC device **28.** Those skilled in the art will appreciate that the mobile wireless communications device **26** may include other components, such as input devices, displays, memories, speakers, and image sensors. The wireless transceiver **27** and second NFC device **28** are coupled to the processor **29.** The wireless transceiver **27** may include a cellular transceiver, and may be configured to perform both voice and data cellular communications. The wireless transceiver **27** may also include other types of transceivers, such as a Bluetooth transceiver, for example.

The passive NFC device **24** is configured to send the identifier to the second NFC device **28** based upon proximity therewith. The identifier may include an NFC device identification number, phrase, or code. Additionally or alternatively, the identifier may include information such as a NFC device location or NFC device owner.

The processor **29** is configured to receive the identifier for the passive NFC device **24** via the second NFC device **28.**

The processor **29** then sends the identifier to a media device **45** (discussed in detail below) via the wireless transceiver **27.** The processor **29** in turn receives data relating to the at least one time variable image based upon the identifier and the identifier time. The identifier time may be based upon the date and/or time the identifier was received, or the date and/or time that NFC communications were established between the passive and second NFC devices **24, 28.** The data may be advertising data, such as visual, audio, and/or visual advertisements. This data may, in some applications, be an updated version of information contained in the image, such as a flight or train arrival or departure time.

The fact that the data is based upon both the identifier and the identifier time is particularly useful in reducing the complexity of the display **21** and the associated passive NFC device **24.** For example, when the image(s) presented on the display are changed, the passive NFC device **24** may still transmit a same identifier, as the identifier time can be used to determine which image prompted the mobile wireless communications device **26** to be brought within NFC communications range with the passive NFC device **24.**

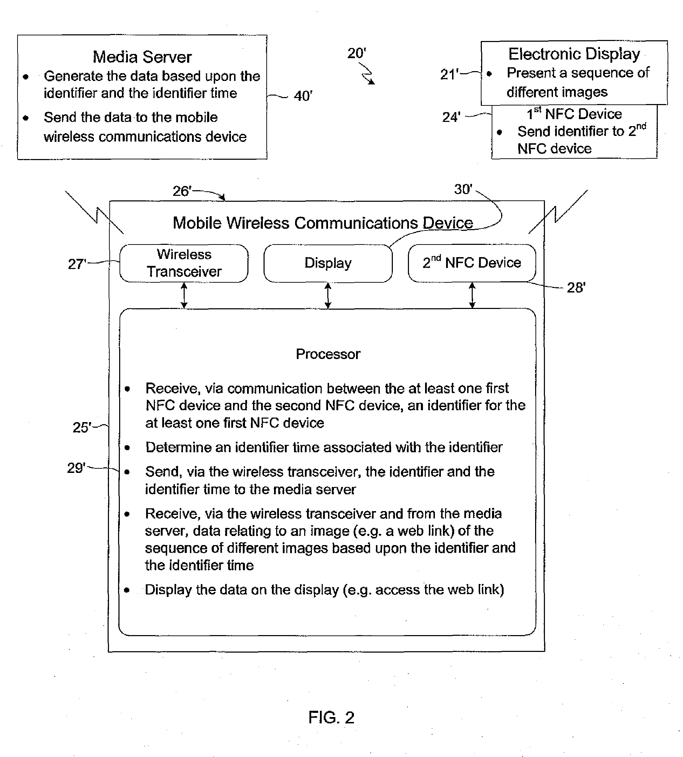

With reference to FIG. 2, one example embodiment of the communications system **20'** is now described. Here, the mobile wireless communications device **26'** includes a display **30'** coupled to the processor **29',** in addition to the wireless transceiver **27'** and second NFC device **28'.** In addition, here, the display is an electronic display **21',** and presents a sequence of difference images. It should be understood that multiple images may be displayed at once in the sequence, that a single image may be displayed at a time in the sequence, or any combination thereof.

There may be a plurality of passive NFC devices **24'.** Each passive NFC device **24'** has a unique identifier associated therewith. These passive NFC devices **24'** may be associated with the electronic display **21'** in a variety of ways. For example, the passive NFC devices **24'** may be positioned so as to border adjacent different portions of the electronic display **21'.** Alternatively, the passive NFC devices **24'** may be positioned so as to be above or below the electronic display **21'**and may form a grid or other pattern associating each passive NRC device with a unique area of the display. Additionally, the passive NFC devices **24'** may be spaced apart from the electronic display **21',** for example carried by a member spaced apart from the electronic display.

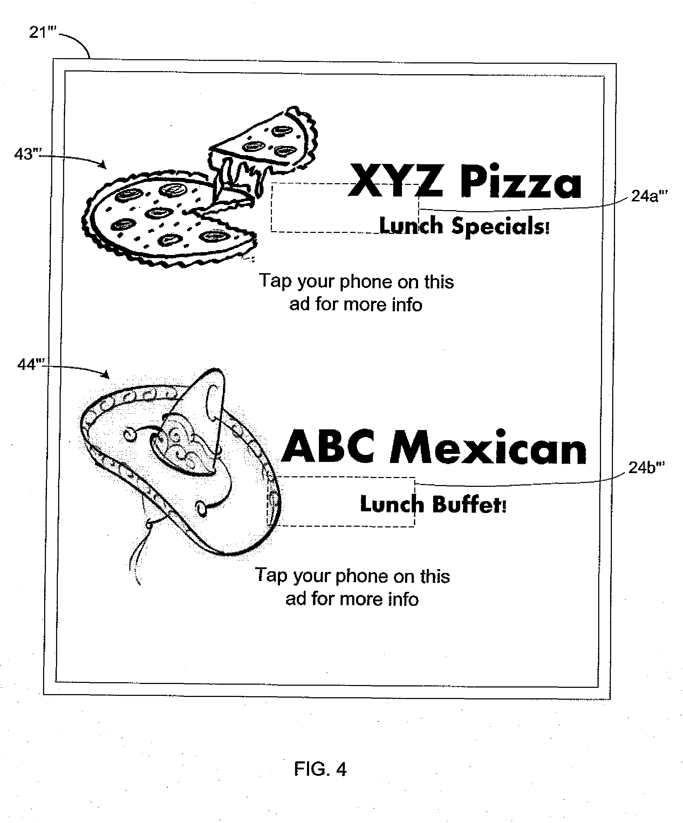

Furthermore, the passive NFC devices may be carried by a housing and may be positioned behind different portions of the electronic display **21'.** Such an example is shown in FIG. 4. Here, the electronic display **21"'** is displaying an XYZ Pizza advertisement **43"',** and an ABC Mexican **44"'** advertisement. The passive NFC device **24a"'** is positioned behind the portion of the display **21"'** on which the XYZ Pizza advertisement **43"'** is displayed, and the passive NFC device **24b"'** is positioned behind the portion of the display on which the ABC Mexican advertisement **44"'** is displayed.

Referring again to FIG. 2, the media server in this communications system **20'** is a media server **40'.** The processor **25'** here determines the identifier time associated with the identifier, and sends the identifier and the identifier time to the media server **40'** via the wireless transceiver **27'.** The media server **40'** generates the data based upon the identifier and the identifier time, and then sends the data to wireless transceiver **27'** of the mobile wireless communications device **26'.** The media server **40'** may determine which image of the sequence thereof prompted the mobile wireless communications device **26'** to be placed within NFC communications range thereof based upon the identifier time (e.g. the identifier time may be 1:23PM, and the media server **40'** may determine that the passive NFC device **24'** was associated with a given image displayed at 1:23PM). The processor **29'** receives the data and displays the data on the display **30'.** Here, the data is a web link, and the processor **29'** displays the data by accessing the web link, such as by launching a web browser.

It should be appreciated that the media server **40'** and mobile wireless communications device **26'** may communicate directly, or may communicate via a wide area network (WLAN), such as the Internet. In such a case, the mobile wireless communications device **26'** may have a wireless connection to the WLAN, and the media server **40'** may have a wired connection to the WLAN, for example. Those elements not specifically described are similar to those of the communications system **20** described above and need no further description.

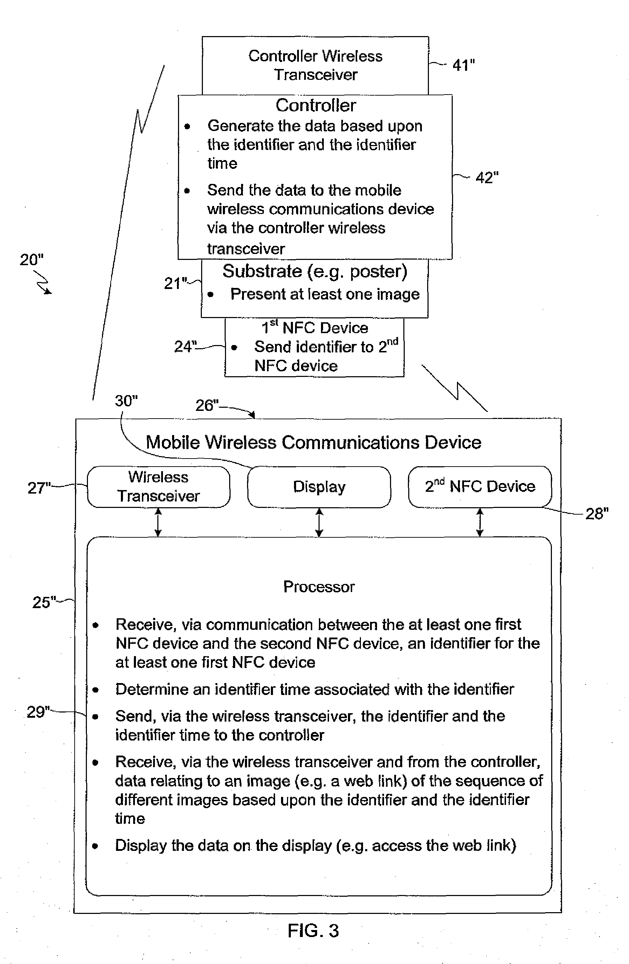

A further embodiment of a communications system 20" is now described with reference to FIG. 3. In this embodiment, the display is a substrate **21",** such as a poster, and the passive NFC device **24"** is associated therewith. In addition, the media device here is a controller **42",** which has a controller wireless transceiver **41"** associated therewith. The processor **29"** sends the identifier to the controller **42",** via the wireless transceiver **27"** and the controller wireless transceiver **21".** The controller **42"** in turn generates the identifier time, generated the data based upon the identifier and the identifier time, and sends the data to the mobile wireless communications device **26"** via the controller wireless transceiver **41"** and the wireless transceiver **27".** Those elements not specifically described are similar to those of the communications system **20** described above and need no further description.

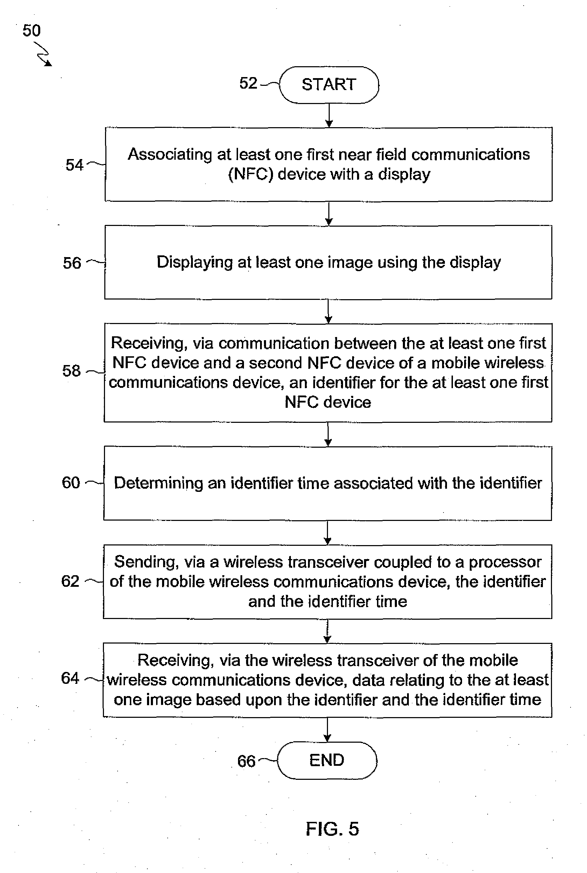

With reference to the flowchart **50** of FIG. 5, a communications method is now described. After the start (Block **52),** at least one passive NFC device is associated with a display (Block **54).** Then, at least one time variable image is displayed using the display (Block **56).** Next, an identifier for the at least one passive NFC device is received via communication between the at least passive NFC device and a second NFC device of a mobile wireless communications device (Block **58).**

Then, an identifier time is associated with the identifier (Block **60).** Thereafter, the identifier and the identifier are sent using a wireless transceiver coupled to a processor of the mobile wireless communications device (Block **62).** Next, data relating to the at least one time variable image and based upon the identifier and the identifier time is received via the wireless transceiver (Block **64).** Block **66** indicates the end of the method.

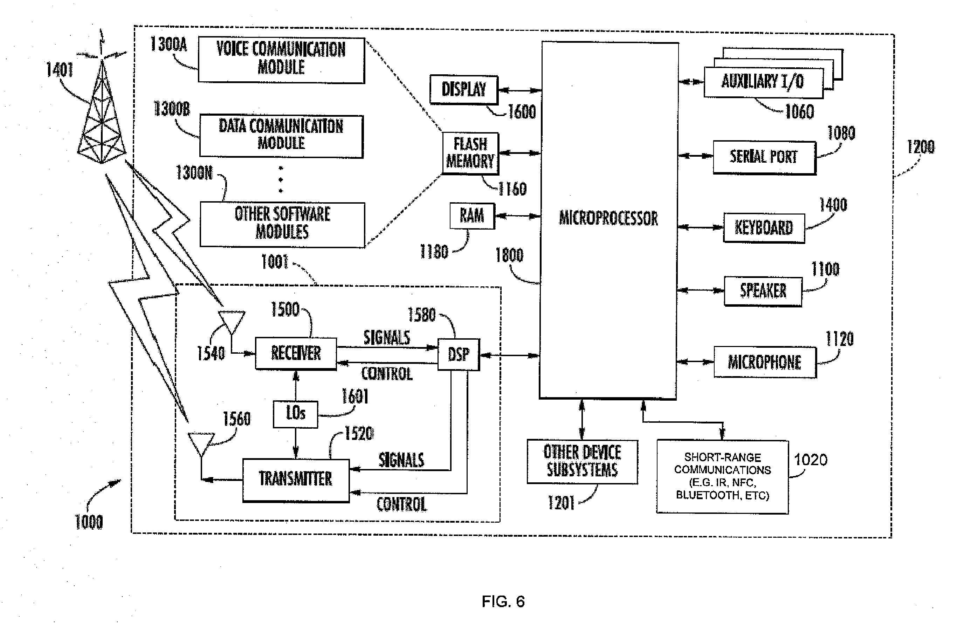

Example components of a mobile wireless communications device **1000** that may be used in accordance with the above-described embodiments are further described below with reference to FIG. 6. The device **1000** illustratively includes a housing **1200,** a keyboard or keypad **1400** and an output device **1600.** The output device shown is a display **1600,** which may comprise a full graphic LCD. Other types of output devices may alternatively be utilized. A processing device **1800** is contained within the housing **1200** and is coupled between the keypad **1400** and the display **1600.** The processing device **1800** controls the operation of the display **1600,** as well as the overall operation of the mobile device **1000,** in response to actuation of keys on the keypad **1400.**

The housing **1200** may be elongated vertically, or may take on other sizes and shapes (including clamshell housing structures). The keypad may include a mode selection key, or other hardware or software for switching between text entry and telephony entry.

In addition to the processing device **1800,** other parts of the mobile device **1000** are shown schematically in FIG. 6. These include a communications subsystem **1001;** a short-range communications subsystem **1020;** the keypad **1400** and the display **1600,** along with other input/output devices **1060, 1080, 1100** and **1120;** as well as memory devices **1160, 1180** and various other device subsystems **1201.** The mobile device **1000** may comprise a two-way RF communications device having data and, optionally, voice communications capabilities. In addition, the mobile device **1000** may have the capability to communicate with other computer systems via the Internet.

Operating system software executed by the processing device **1800** is stored in a persistent store, such as the flash memory **1160,** but may be stored in other types of memory devices, such as a read only memory (ROM) or similar storage element. In addition, system software, specific device applications, or parts thereof, may be temporarily loaded into a volatile store, such as the random access memory (RAM) **1180.** Communications signals received by the mobile device may also be stored in the RAM **1180.**

The processing device **1800,** in addition to its operating system functions, enables execution of software applications **1300A-1300N** on the device **1000.** A predetermined set of applications that control basic device operations, such as data and voice communications **1300A** and **1300B,** may be installed on the device **1000** during manufacture. In addition, a personal information manager (PIM) application may be installed during manufacture. The PIM may be capable of organizing and managing data items, such as e-mail, calendar events, voice mails, appointments, and task items. The PIM application may also be capable of sending and receiving data items via a wireless network **1401.** The PIM data items may be seamlessly integrated, synchronized and updated via the wireless network **1401** with corresponding data items stored or associated with a host computer system.

Communication functions, including data and voice communications, are performed through the communications subsystem **1001,** and possibly through the short-range communications subsystem. The communications subsystem **1001** includes a receiver **1500,** a transmitter **1520,** and one or more antennas **1540** and **1560.** In addition, the communications subsystem **1001** also includes a processing module, such as a digital signal processor (DSP) **1580,** and local oscillators (LOs) **1601.** The specific design and implementation of the communications subsystem **1001** is dependent upon the communications network in which the mobile device **1000** is intended to operate. For example, a mobile device **1000** may include a communications subsystem **1001** designed to operate with the Mobitex™, Data TAC™ or General Packet Radio Service (GPRS) mobile data communications networks, and also designed to operate with any of a variety of voice communications networks, such as AMPS, TDMA, CDMA, WCDMA, PCS, GSM, EDGE, etc. Other types of data and voice networks, both separate and integrated, may also be utilized with the mobile device **1000.** The mobile device **1000** may also be compliant with other communications standards such as 3GSM, 3GPP, UMTS, 4G, etc.

Network access requirements vary depending upon the type of communication system. For example, in the Mobitex and DataTAC networks, mobile devices are registered on the network using a unique personal identification number or PIN associated with each device. In GPRS networks, however, network access is associated with a subscriber or user of a device. A GPRS device therefore typically involves use of a subscriber identity module, commonly referred to as a SIM card, in order to operate on a GPRS network.

When required network registration or activation procedures have been completed, the mobile device **1000** may send and receive communications signals over the communication network **1401.** Signals received from the communications network **1401** by the antenna **1540** are routed to the receiver **1500,** which provides for signal amplification, frequency down conversion, filtering, channel selection, etc., and may also provide analog to digital conversion. Analog-to-digital conversion of the received signal allows the DSP **1580** to perform more complex communications functions, such as demodulation and decoding. In a similar manner, signals to be transmitted to the network **1401** are processed (e.g. modulated and encoded) by the DSP **1580** and are then provided to the transmitter **1520** for digital to analog conversion, frequency up conversion, filtering, amplification and transmission to the communication network **1401** (or networks) via the antenna **1560.**

In addition to processing communications signals, the DSP **1580** provides for control of the receiver **1500** and the transmitter **1520.** For example, gains applied to communications signals in the receiver **1500** and transmitter **1520** may be adaptively controlled through automatic gain control algorithms implemented in the DSP **1580.**

In a data communications mode, a received signal, such as a text message or web page download, is processed by the communications subsystem **1001** and is input to the processing device **1800.** The received signal is then further processed by the processing device **1800** for an output to the display **1600,** or alternatively to some other auxiliary I/O device **1060.** A device may also be used to compose data items, such as e-mail messages, using the keypad **1400** and/or some other auxiliary I/O device **1060,** such as a touchpad, a rocker switch, a thumb-wheel, or some other type of input device. The composed data items may then be transmitted over the communications network **1401** via the communications subsystem **1001.**

In a voice communications mode, overall operation of the device is substantially similar to the data communications mode, except that received signals are output to a speaker **1100,** and signals for transmission are generated by a microphone **1120.** Alternative voice or audio I/O subsystems, such as a voice message recording subsystem, may also be implemented on the device **1000.** In addition, the display **1600** may also be utilized in voice communications mode, for example to display the identity of a calling party, the duration of a voice call, or other voice call related information.

The short-range communications subsystem enables communication between the mobile device **1000** and other proximate systems or devices, which need not necessarily be similar devices. For example, the short-range communications subsystem may include an infrared device and associated circuits and components, a Bluetooth™ communications module to provide for communication with similarly-enabled systems and devices, or a near field communications (NFC) sensor for communicating with a NFC device or NFC tag via NFC communications.

Many modifications and other embodiments of the present disclosure will come to the mind of one skilled in the art having the benefit of the teachings presented in the foregoing descriptions and the associated drawings. Therefore, it is understood that the present disclosure is not to be limited to the specific embodiments disclosed, and that modifications and embodiments are intended to be included within the scope of the appended claims.

## Claims

1. A communications system comprising:
a display configured to display at least one time variable image;
at least one passive near field communications (NFC) device associated with said display and having an identifier associated therewith;
a media device; and
a mobile wireless communications device comprising
a second NFC device,
a wireless transceiver, and
a processor coupled to said second NFC device, and said wireless transceiver, and configured to
receive, via communication between said at least one passive NFC device and said second NFC device, the identifier associated with said at least one passive NFC device,
send, via said wireless transceiver, the identifier to said media device, and
receive, from said media device and via said wireless transceiver, data relating to the at least one time variable image based upon the identifier and an identifier time.

2. The communications system of Claim 1, wherein said processor is configured to determine the identifier time and to send the identifier time to said media device.

3. The communications system of Claim 1, wherein said media device is configured to determine the identifier time.

4. The communications system of Claim 1, wherein said mobile wireless communications device further comprises a mobile display coupled to said processor, and wherein said processor is configured to present the data on said mobile display.

5. The communications system of Claim 1, wherein the data comprises a web link; and wherein said processor is configured to access the web link upon receipt thereof.

6. The communications system of Claim 1, wherein said display comprises an electronic display configured to display the at least one time variable image as a sequence of different images.

7. The communications system of Claim 1, wherein the at least one time variable image comprises a plurality thereof; and wherein said at least one passive NFC device comprises a plurality thereof positioned adjacent respective different images.

8. The communications system of Claim 1, wherein said display comprises a substrate; and wherein the at least one time variable image is printed thereon.

9. A mobile wireless communications device for communications with a display configured to display at least one time variable image, at least one passive near field communications (NFC) device associated with said display and having an identifier associated therewith, and a media device, the mobile wireless communications device comprising:
a second NFC device,
a wireless transceiver, and
a processor coupled to said second NFC device, and said wireless transceiver, and configured to
receive, via communication between the at least one passive NFC device and said second NFC device, the identifier associated with the at least one passive NFC device,
send, via said wireless transceiver, the identifier to the media device, and
receive, from said media device and via said wireless transceiver, data relating to the at least one time variable image based upon the identifier and an identifier time.

10. The mobile wireless communications device of Claim 9, wherein said mobile wireless communications device further comprises a mobile display coupled to said processor, and wherein said processor is configured to present the data on said mobile display.

11. The mobile wireless communications device of Claim 9, wherein the data comprises a web link; and wherein said processor is configured to access the web link upon receipt thereof.

12. A communications method comprising:
displaying at least one time variable image using a display having at least one near field communications (NFC) device associated with the display;
receiving, via communication between the at least one passive NFC device and a second NFC device of a mobile wireless communications device, an identifier associated with the at least one passive NFC device;
sending, via a wireless transceiver coupled to a processor of the mobile wireless communications device, the identifier to a media device; and
receiving, from the media device and via the wireless transceiver of the mobile wireless communications device, data relating to the at least one time variable image based upon the identifier and an identifier time.

13. The communications method of Claim 12, wherein the identifier time is determined and sent to said media device, using the processor.

14. The communications method of Claim 12, the identifier time is determined by the media device.

15. The communications method of Claim 12, further comprising presenting the data on a mobile display of the mobile wireless communications device, using the processor.
